# EUROPÄISCHE PATENTSCHRIFT

(11) **EP 2 627 491 B1**
(45) Veröffentlichungstag und Bekanntmachung des Hinweises auf die Patenterteilung: **04.03.2015**
(21) Anmeldenummer: 11770420.5
(22) Anmeldetag: 13.10.2011
(51) Int. Cl.: B29C 47/00, B29C 47/10

(54) **VERFAHREN ZUR HERSTELLUNG FLAMMGESCHÜTZTER THERMOPLASTISCHER FORMMASSEN**
METHOD FOR PRODUCING FLAME-PROOFED THERMOPLASTIC MOLDING COMPOUNDS
PROCÉDÉ DE FABRICATION DE MATIÈRES À MOULER THERMOPLASTIQUES IGNIFUGÉES

(30) Priorität: 15.10.2010 EP 10187680
(43) Veröffentlichungstag der Anmeldung: 21.08.2013
(73) Patentinhaber: Styrolution Europe GmbH, 60325 Frankfurt am Main (DE)
(72) Erfinder: MÜLLER, Matthias, 64319 Pfungstadt (DE); GÜNTHERBERG, Norbert, 67346 Speyer (DE)
(74) Vertreter: Jacobi, Markus Alexander
(86) Internationale Anmeldenummer: PCT/EP2011/067919
(87) Internationale Veröffentlichungsnummer: WO 2012/049264

(56) Entgegenhaltungen:
- EP-A1- 0 824 134
- WO-A1-98/13412
- WO-A1-2009/043758
- DE-A1- 10 016 508
- GB-A- 2 260 335

## Beschreibung

Die Erfindung betrifft Verfahren zur Herstellung thermoplastischer Formmassen nach dem Anspruch 1. WO 2009 043758 offenbart ein Verfahren nach dem Oberbegriff.

Mit expandierbarem Graphit, der auch als Blähgraphit bezeichnet wird, als Flammschutzmittel ausgerüstete thermoplastische Polymermassen sind in der Literatur bekannt.

Beispielsweise wird gemäß WO 2003/046071 expandierbarer Graphit in Polystyrol (PS) oder schlagzäh modifiziertem Polystyrol (HIPS) eingesetzt. Darüberhinaus wird laut dieser Schrift als weitere Flammschutzmittel-Komponente eine halogenhaltige Verbindung in Mengen von 2 bis 11%, gerechnet als Halogen, benötigt.

Aus beispielsweise toxikologischen Gründen ist es jedoch wünschenswert, den Einsatz halogenhaltiger Flammschutzmittel möglichst weitgehend zu vermeiden.

Halogenfrei flammgeschützte Thermoplaste, die expandierbaren Graphit und eine Phosphorverbindung als Flammschutzkomponenten enthalten, werden in WO 2000/34367 und WO 2000/34342 offenbart. Formmassen auf Basis solcherart flammgeschützter Styrolpolymerisate sind bzgl. ihres Abtropfverhaltens im Brandfall aber verbesserungswürdig.

Die Patentanmeldung KR-A 10 1996-0001006 offenbart flammgeschütztes Polystyrol, wobei die Flammschutzmittelkomponenten expandierbaren Graphit, eine Phosphorverbindung und Teflon umfassen. Die mittlere Teilchengröße des expandierbaren Graphits beträgt 5 µm. Das als Antitropfmittel zugesetzte Teflon wird in Mengen von 1 bis 5 Gewichtsprozent eingesetzt. Die so erhaltenen halogenfrei flammgeschützten Formmassen besitzen eine gute Wärmebeständigkeit und Stoßfestigkeit.

Ebenfalls mit Blähgraphit, einer Phosphorverbindung und einem fluorierten Polymer flammgeschützte thermoplastische Formmassen werden offenbart in WO 2009/007358, wobei es sich bei den Polymerkomponenten um Acrylnitril-Butadien-Styrol-Copolymere (ABS) und Acrylat-Styrol-Acrylnitril-Copolymere (ASA) handelt.

Oftmals ist es schwierig, bei thermoplastischen Formmassen, die mit expandierbarem Graphit flammhemmend ausgerüstet sind, einerseits eine ausreichende Flammhemmung zu erreichen, andererseits aber ausreichend gute mechanische Eigenschaften beizubehalten.

Eine Aufgabe der vorliegenden Erfindung ist es, mit expandierbarem Graphit ausgerüstete thermoplastische Formmassen bereit zu stellen, die gegenüber bekannten Formmassen eine verbesserte Kombination aus flammhemmenden und mechanischen Eigenschaften sowie einen akzeptablen Geruch aufweisen.

Demgemäß wurden die eingangs definierten Verfahren gefunden.

Die Dosierung des expandierbaren Graphits B1) in den Schneckenextruder wird erfindungsgemäß im Bereich von 0,7 L bis 0,85L der Baulänge durchgeführt.

Die gemäß den erfindungsgemäßen Verfahren hergestellten thermoplastischen Formmassen enthaltend mindestens einen expandierbaren Graphit weisen gegenüber bekannten Formmassen eine verbesserte Kombination aus flammhemmenden und mechanischen Eigenschaften und einen relativ geringen Eigengeruch auf.

Die erfindungsgemäßen Verfahren sowie die weiteren erfindungsgemäßen Gegenstände werden im folgenden beschrieben.

Die nach den erfindungsgemäßen Verfahren herstellbaren thermoplastischen Formmassen enthalten
A) 40 bis 99 Gew.-%, bevorzugt 50 bis 95 Gew.-%, besonders bevorzugt 65 bis 90 Gew.-%, Komponente A,
B) 1 bis 60 Gew.-%, bevorzugt 5 bis 50 Gew.-%, besonders bevorzugt 10 bis 35 Gew.-%, Komponente B, und
C) 0 bis 60 Gew.-%, bevorzugt 0 bis 45 Gew.-%, besonders bevorzugt 0 bis 25 Gew.-% Komponente C,
wobei die Gewichtsprozente jeweils auf das Gesamtgewicht der Komponenten A) bis C) bezogen sind und zusammen 100 Gew.-% ergeben.

Die Flammschutzmittelkomponente B) kann grundsätzlich ausschließlich aus Komponente B1), dem expandierbaren Graphit, bestehen. In einer bevorzugten Ausführungsform der Erfindung umfässt die Flammschutzmittelkomponente B) außer dem expandierbaren Graphit jedoch weitere Komponenten, insbesondere die im folgenden noch beschriebenen Komponenten B2) und B3).

Die Flammschutzmittelkomponente B) umfasst in einer Ausführungsform insbesondere
B1) 20 bis 79,99 Gew.-%, bevorzugt 30 bis 69,9 Gew.-%, besonders bevorzugt 40 bis 59,5 Gew.-%, der Komponente B1),
B2) 20 bis 79,99 Gew.-%, bevorzugt 30 bis 69,9 Gew.-%, besonders bevorzugt 40 bis 59,5 Gew.-%, der Komponente B2) und
B3) 0,01 bis 4 Gew.-%, bevorzugt 0,1 bis 3 Gew.-%, besonders bevorzugt 0,2 bis 2 Gew.-%, der Komponente B3),
wobei die Gewichtsprozente jeweils auf das Gesamtgewicht der Komponenten B1) bis B3) bezogen sind und zusammen 100 Gew.-% ergeben.

### Komponente A):

Als Komponente A) der thermoplastischen Formmassen sind grundsätzlich alle dem Fachmann bekannten und in der Literatur beschriebenen thermoplastischen Polymere oder Mischungen derselben geeignet.

Geeignet als Komponente A) sind z.B.
- Polyolefine wie Polyethylen und Polypropylen,
- Polyvinylchlorid,
- Styrolpolymere wie Polystyrol (schlagfest oder nicht schlagfest modifiziert),
- schlagzähmodifizierte vinylaromatische Copolymere wie ABS (Acrylnitril-Butadien-Styrol), ASA (Acrylnitril-Styrol-Acrylat) und MABS (transparentes ABS, enthaltend Methacrylat-Einheiten),
- Styrol-Butadien-Blockcopolymere ("SBC"), insbesondere thermoplastische Elastomere auf Basis von Styrol ("S-TPE"),
- Polycarbonate (z.B. Makrolon^{®} der Bayer AG),
- Polymethylmethacrylate (PMMA).

Bevorzugt als Komponente A) sind ein oder mehrere Polymere ausgewählt aus der Gruppe ASA, ABS und Polystyrol einsetzbar.

Bevorzugte schlagzäh modifizierte vinylaromatische Copolymere sind schlagzäh modifizierte Copolymerisate aus vinylaromatischen Monomeren und Vinylcyaniden (insbesondere SAN). Bevorzugt werden als schlagzähmodifiziertes SAN ASA-Polymerisate und/oder ABS-Polymerisate eingesetzt, sowie (Meth)acrylat-Acrylnitril-Butadien-Styrol-Polymerisate ("MABS", transparentes ABS), aber auch Blends von SAN, ABS, ASA und MABS mit anderen Thermoplasten wie Polycarbonat, Polyamid, Polyethylenterephthalat, Polybutylenterephthalat, PVC, Polyolefinen.

Unter ASA-Polymerisaten werden im allgemeinen schlagzähmodifizierte SAN-Polymerisate verstanden, bei denen kautschukelastische Pfropfcopolymerisate von vinylaromatischen Verbindungen, insbesondere Styrol, und Vinylcyaniden, insbesondere Acrylnitril auf Polyalkylacrylatkautschuken in einer Copolymermatrix aus insbesondere Styrol und/oder α-Methylstyrol und Acrylnitril vorliegen.

Unter ABS-Polymerisaten werden im allgemeinen schlagzähmodifizierte SAN-Polymerisate verstanden, bei denen Dien-Polymerisate, insbesondere 1,3-Polybutadien, in einer Copolymermatrix aus insbesondere Styrol und/oder α-Methylstyrol und Acrylnitril vorliegen.

Als Komponente A) geeignet sind grundsätzlich auch alle dem Fachmann bekannten St<rol-Block-Copolymere und in der Literatur beschriebenen SBC. Bevorzugt eingesetzt werden S-TPE, insbesondere solche mit einer Reißdehnung von mehr als 300 %, besonders bevorzugt mehr als 500 %, insbesondere von mehr als 500% bis 600 % (diese und alle anderen in dieser Anmeldung genannten Reißdehnungen und Zugfestigkeiten werden bestimmt im Zugversuch entsprechend ISO 527-2:1996 an Probekörpern vom Typ 1BA (Anhang A der genannten Norm: "kleine Probekörper")).

Besonders bevorzugt mischt man als SBC oder S-TPE ein lineares oder sternförmiges Styrol-Butadien-Blockcopolymer mit außenliegenden Polystyrolblöcken S und dazwischenliegenden Styrol-Butadien-Copolymerblöcken mit statistischer Styrol/Butadien-Verteilung (S/B)_{random} oder einem Styrolgradienten (S/B)ₜₐₚₑᵣ zu (z.B. Styrolux^{®} oder insbesondere Styroflex^{®} der BASF SE, K-Resin^{®} der CPC). Weitere Komponenten C) werden vertrieben unter den Marken Cariflex^{®}, Kraton^{®}, Tufprene^{®}, Asaflex^{®}.

Der Gesamtbutadiengehalt der SBC liegt bevorzugt im Bereich von 15 bis 50 Gew.-%, besonders bevorzugt im Bereich von 25 bis 40 Gew.-%, der Gesamtstyrolgehalt liegt entsprechend bevorzugt im Bereich von 50 bis 85 Gew.-%, besonders bevorzugt im Bereich von 60 bis 75 Gew.-%.

Vorzugsweise besteht der Styrol-Butadien-Block (S/B) aus 30 bis 75 Gew.-% Styrol und 25 bis 70 Gew.-% Butadien. Besonders bevorzugt hat ein Block (S/B) einen Butadienanteil von 35 bis 70 Gew.-% und einen Styrolanteil von 30 bis 65 Gew.-%.

Der Anteil der Polystyrolblöcke S liegt bevorzugt im Bereich von 5 bis 40 Gew.-%, insbesondere im Bereich von 25 bis 35 Gew.-%, bezogen auf das gesamte Blockcopolymer. Der Anteil der Copolymerblöcke S/B liegt bevorzugt im Bereich von 60 bis 95 Gew.-%, insbesondere im Bereich von 65 bis 75 Gew.-%.

Besonders bevorzugt als Komponente A) sind lineare Styrol-Butadien-Blockcopolymere der allgemeinen Struktur S-(S/B)-S mit ein oder mehreren, zwischen den beiden S-Blöcken liegenden, eine statische Styrol/Butadien-Verteilung aufweisenden Blöcken (S/B)_{random}. Solche Blockcopolymeren sind durch anionische Polymerisation in einem unpolaren Lösungsmittel unter Zusatz eines polaren Cosolvens oder eines Kaliumsalzes erhältlich, wie beispielsweise in WO 1995/35335 bzw. WO 1997/40079 beschrieben.

Als Vinylgehalt wird der relative Anteil an 1,2-Verknüpfungen der Dieneinheiten, bezogen auf die Summe der 1,2-, 1,4-cis und 1,4-trans-Verknüpfungen verstanden. Der 1,2-Vinylgehalt im Styrol-Butadien-Copolymerblock (S/B) liegt bevorzugt unter 20 %, insbesondere im Bereich von 10 bis 18%, besonders bevorzugt im Bereich von 12 - 16 %.

Die ungesättigten Anteile, insbesondere solche, die sich von Butadien ableiten, der als Komponente A) einsetzbaren S-TPE und SBC können auch ganz oder teilweise hydriert sein. Bei (teil)hydrierten SBC kann der Anteil an 1,2-Verknüpfungen der Dieneinheit vor dem Hydrierschritt auch bis zu 60 % sein.

Als Komponente A) eignen sich beispielsweise auch teilkristalline Polyolefine, wie Homo- oder Copolymerisate von Ethylen, Propylen, Buten-1, Penten-1, Hexen-1, 4-Methyl-penten-1 sowie Ethylencopolymerisate mit Vinylacetat, Vinylalkohol, Ethylacrylat, Butyl-acrylat oder Methacrylat. Bevorzugt wird als Komponente A ein High-Density-Polyethylen (HDPE), Low-Density-Polyethylen (LDPE), Linear-Low-Density-Polyethylen (LLDPE), Polypropylen (PP), EthylenVinylacetat-Copolymerisat (EVA) oder Ethylen-Acryl-Copolymerisat eingesetzt. Eine insbesondere bevorzugte Komponente A) ist Polypropylen.

Die als Komponente A) geeigneten Polycarbonate haben vorzugsweise ein Molekulargewicht (Gewichtsmittelwert M_{w}, bestimmt mittels Gelpermeationschromatographie in Tetrahydrofuran gegen Polystyrolstandards) im Bereich von 10 000 bis 60 000 g/mol. Sie sind z.B. entsprechend den Verfahren der DE-B-1 300 266 durch Grenzflächenpolykondensation oder gemäß dem Verfahren der DE-A-1 495 730 durch Umsetzung von Diphenylcarbonat mit Bisphenolen erhältlich. Bervorzugtes Bisphenol ist 2,2-Di(4-hydroxyphenyl)propan, im allgemeinen - wie auch im folgenden - als Bisphenol A bezeichnet. Anstelle von Bisphenol A können auch andere aromatische Dihydroxyverbindungen verwendet werden, insbesondere 2,2-Di(4-hydroxyphenyl)pentan, 2,6-Dihydroxynaphthalin, 4,4'-Dihydroxydiphenylsulfan, 4,4'-Dihydroxydiphenylether, 4,4'-Dihydroxydiphenylsulfit, 4,4'-Dihydroxydiphenylmethan, 1,1-Di-(4-hydroxyphenyl)ethan, 4,4-Dihydroxydiphenyl oder Dihydroxydiphenylcycloalkane, bevorzugt Dihydroxydiphenylcyclohexane oder Dihydroxylcyclopentane, insbesondere 1,1-Bis(4-hydroxyphenyl)-3,3,5-trimethylcyclohexan sowie Mischungen der vorgenannten Dihydroxyverbindungen.

Besonders bevorzugte Polycarbonate sind solche auf der Basis von Bisphenol A oder Bisphenol A zusammen mit bis zu 80 Mol-% der vorstehend genannten aromatischen Dihydroxyverbindungen.

Besonders gut als Komponente A) geeignete Polycarbonate sind solche, die Einheiten enthalten, welche sich von Resorcinol- oder Alkylresorcinolestern ableiten, wie sie beispielsweise in WO 2000/61664, WO 2000/15718 oder WO 2000/26274 beschrieben werden; solche Polycarbonate werden beispielsweise von General Electric Company unter der Marke SollX^{®} vertrieben.

Es können auch Copolycarbonate gemäß der US 3,737,409 verwendet werden; von besonderem Interesse sind dabei Copolycarbonate auf der Basis von Bisphenol A und Di-(3,5-dimethyldihydroxyphenyl)sulfon, die sich durch eine hohe Wärmeformbeständigkeit auszeichnen. Ferner ist es möglich, Mischungen unterschiedlicher Polycarbonate einzusetzen.

Die mittleren Molekulargewichte (Gewichtsmittelwert M_{w}, bestimmt mittels Gelpermeationschromatographie in Tetrahydrofuran gegen Polystyrolstandards) der Polycarbonate liegen erfindungsgemäß im Bereich von 10 000 bis 64 000 g/mol. Bevorzugt liegen sie im Bereich von 15 000 bis 63 000, insbesondere im Bereich von 15 000 bis 60 000 g/mol. Dies bedeutet, dass die Polycarbonate relative Lösungsviskositäten im Bereich von 1,1 bis 1,3, gemessen in 0,5 gew.-%iger Lösung in Dichlormethan bei 25°C, bevorzugt von 1,15 bis 1,33, haben. Vorzugsweise unterscheiden sich die relativen Lösungsviskositäten der eingesetzten Polycarbonate um nicht mehr als 0,05, insbesondere nicht mehr als 0,04.

Die Polycarbonate können sowohl als Mahlgut als auch in granulierter Form eingesetzt werden.

Generell ist als Komponente A) jedes aromatische oder aliphatische thermoplastische Polyurethan geeignet, bevorzugt sind amorphe aliphatische thermoplastische Polyurethane geeignet, die transparent sind. Aliphatische thermoplastische Polyurethane und deren Herstellung sind dem Fachmann bekannt, beispielsweise aus EP-A1 567 883 oder DE-A 10321081, und kommerziell verfügbar, beispielsweise unter den Marken Texin^{®} und Desmopan^{®} der Bayer Aktiengesellschaft.

### Komponente B):

Die nach den erfindungsgemäßen Verfahren herstellbaren thermoplastischen Formmassen enthalten als Komponente B) eine Flammschutzmittelmischung umfassend expandierbaren Graphit B1).

In einer bevorzugten Ausführungsform der Erfindung umfassen die nach den erfindungsgemäßen Verfahren herstellbaren thermoplastischen Formmassen
B1) expandierbaren Graphit,
B2) eine oder mehrere Phosphor enthaltende Flammschutzverbindungen und
B3) ein fluorhaltiges Polymer.

Die nach den erfindungsgemäßen Verfahren herstellbaren Formmassen enthalten als Komponente B1) dem Fachmann bekannten und in der Literatur beschriebenen expandierbaren Graphit, sogenannten Blähgraphit (wärme- bzw. hitzeexpandierbarer Graphit). Dieser leitet sich in der Regel von natürlichem oder künstlichem Graphit ab. Der Blähgraphit ist beispielsweise erhältlich durch Oxidation von natürlichem und/oder künstlichem Graphit. Als Oxidationsagentien können H₂O₂ oder Salpetersäure in Schwefelsäure eingesetzt werden. Weiterhin kann der Blähgraphit durch Reduktion, z.B. mit Natriumnaphthalenid in einem aprotischen organischen Lösungsmittel hergestellt werden.

Aufgrund seiner Schichtgitterstruktur ist Graphit in der Lage, spezielle Formen von Einlagerungsverbindungen zu bilden. In diesen so genannten Zwischengitterverbindungen sind Fremdatome oder -moleküle in z.T. stöchiometrischen Verhältnissen in die Räume zwischen den Kohlenstoffatomen aufgenommen worden. Die Oberfläche des Blähgraphits kann zur besseren Verträglichkeit ggü. der Thermoplastmatrix mit einem Beschichtungsmittel beschichtet sein, beispielsweise mit dem Fachmann bekannten Silanschlichten.

Für den Fall, dass der Blähgraphit durch o.g. Oxidation erhalten wurde, kann es notwendig sein, eine alkalische Verbindung zuzusetzen, da der Blähgraphit (durch die enthaltende Säure) ansonsten Korrosion der Formmassen und/oder Lager- und Herstellapparate derartiger Formmassen verursachen kann. Insbesondere Alkaliverbindungen sowie Mg(OH)₂ oder Al-Hydroxide können in Mengen bis zu 10, vorzugsweise bis zu 5 Gew.-% (bezogen auf 100 Gew.-% B1) zugegeben werden. Vorteilhaft erfolgt die Mischung bevor die Komponenten compoundiert werden.

Vorzugsweise beträgt die Hitze-Ausdehnung des Blähgraphits bei schnellem Aufheizen von Raumtemperatur auf 800°C (in Richtung der c-Achse des Kristalls) mindestens 100 ml/g, vorzugsweise mindestens 110 ml/g (sog. spezifische Volumenänderung).

Wesentlich für die Eignung als Flammschutzmittel ist es, dass der Blähgraphit sich nicht in größerem Ausmaß ausdehnt bei Temperaturen unter 270°C, bevorzugt unter 280°C. Darunter versteht der Fachmann, dass der Blähgraphits bei den genannten Temperaturen in einem Zeitraum von 10 min eine Volumenexpansion von weniger als 20 % erfährt.

Der Ausdehnungskoeffizient (als spezifische Kerngröße) bedeutet in der Regel die Differenz zwischen dem spezifischen Volumen (ml/g) nach Erhitzen und dem spezifischen Volumen bei 20°C Raumtemperatur. Dies wird allgemein gemessen nach folgender Vorschrift: Ein Quarzbehälter wird auf 1000°C in einem elektrischen Schmelzeofen erhitzt. 2 g des Blähgraphits werden schnell in den Quarzbehälter gegeben und dieser 10 sec. im Schmelzeofen belassen.

Das Gewicht von 100 ml des expandierten Graphits wird gemessen, um die sog. "loosened apparent specific gravity" zu bestimmen. Der Kehrwert bildet dann das spezifische Volumen bei dieser Temperatur. Das spezifische Volumen bei Raumtemperatur wird entsprechend bei 20°C gemessen. (Ausdehnungskoeffizient = spez. Volumen nach Erhitzen - spezifisches Volumen bei 20°C).

Die mittlere Teilchengröße D₅₀ des Blähgraphits (bestimmt aus der integralen Volumenverteilung als Volumenmittel der Teilchengrößen, wie sie mittels Laserlichtbeugung an einem Malvern-Mastersizer 2000 am Trockenpulver ermittelt werden; die Laserlichtbeugung liefert die integrale Verteilung des Teilchendurchmessers einer Probe; hieraus lässt sich entnehmen, wie viel Prozent der Teilchen einen Durchmesser gleich oder kleiner einer bestimmten Größe haben; der mittlere Teilchendurchmesser, der auch als D₅₀-Wert der integralen Volumenverteilung bezeichnet wird, ist dabei als der Teilchendurchmesser definiert, bei dem 50 Gew.-% der Teilchen einen kleineren Durchmesser haben als der Durchmesser, der dem D₅₀-Wert entspricht; ebenso haben dann 50 Gew.-% der Teilchen einen größeren Durchmesser als der D₅₀-Wert) liegt vor der Schmelzevermischung im Schneckenextruder vorzugsweise zwischen 10 µm und 1000 µm, bevorzugt zwischen 30 µm und 850 µm, insbesondere bevorzugt zwischen 200 µm und 700 µm. Sind die mittleren Teilchengrößen niedriger, wird in der Regel keine ausreichende Flammschutzwirkung erzielt; sind sie größer, werden üblicherweise die mechanischen Eigenschaften der thermoplastischen Formmassen nachteilig beeinflusst.

Die Dichte des Blähgraphits liegt üblicherweise im Bereich von 0,4 bis 2 g/cm³.

Bei den phosphorhaltigen Verbindungen der Komponente B2) handelt es sich um organische und anorganische Phosphor enthaltende Verbindungen, in denen der Phosphor die Wertigkeitsstufe -3 bis +5 besitzt. Unter der Wertigkeitsstufe soll der Begriff "Oxidationsstufe" verstanden werden, wie er im Lehrbuch der Anorganischen Chemie von A.F. Hollemann und E. Wiberg, Walter des Gruyter und Co. (1964, 57. bis 70. Auflage), Seite 166 bis 177, wiedergegeben ist. Phosphorverbindungen der Wertigkeitsstufen -3 bis +5 leiten sich von Phosphin (-3), Diphosphin (-2), Phosphinoxid (-1), elementarem Phosphor (+0), hypophosphoriger Säure (+1), phosphoriger Säure (+3), Hypodiphosphorsäure (+4) und Phosphorsäure (+5) ab.

Aus der großen Zahl von als Komponente B2) geeigneten phosphorhaltigen Verbindungen, insbesondere den anorganischen oder organischen Phosphaten, Phosphiten, Phosphonaten, Phosphatestern, rotem Phosphor und Triphenylphosphinoxid, seien nur einige Beispiele erwähnt. Beispiele für Phosphorverbindungen der Phosphin-Klasse, die die Wertigkeitsstufe -3 aufweisen, sind aromatische Phosphine, wie Triphenylphosphin, Tritolylphosphin, Trinonylphosphin, Trinaphthylphosphin und Trisnonylphenylphosphin u.a. Besonders geeignet ist Triphenylphosphin.

Beispiele für Phosphorverbindungen der Diphosphinklasse, die die Wertigkeitsstufe -2 aufweisen, sind Tetraphenyldiphosphin, Tetranaphthyldiphosphin u.a.. Besonders geeignet ist Tetranaphthyldiphosphin.

Phosphorverbindungen der Wertigkeitsstufe -1 leiten sich vom Phosphinoxid ab. Geeignet sind Phosphinoxide der allgemeinen Formel (I) 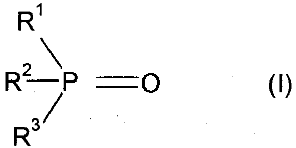 wobei R¹, R² und R³ in Formel (I) gleiche oder verschiedene Alkyl-, Aryl-, Alkylaryl- oder Cycloalkylgruppen mit 8 bis 40 C-Atomen bedeuten.

Beispiele für Phosphinoxide sind Triphenylphosphinoxid, Tritolylphosphinoxid, Trisnonylphenylphosphinoxid, Tricyclohexylphosphinoxid, Tris-(n-butyl)-phosphinoxid, Tris-(n-hexyl)-phosphinoxid, Tris-(n-octyl)-phosphinoxid, Tris-(cyanoethyl)-phosphinoxid, Benzylbis-(cyclohexyl)-phosphinoxid, Benzylbisphenylphosphinoxid, Phenylbis-(n-hexyl)-phosphinoxid. Bevorzugt sind weiterhin oxidierte Umsetzungsprodukte aus Phosphin mit Aldehyden, insbesondere aus t-Butylphosphin mit Glyoxal. Besonders bevorzugt eingesetzt werden Triphenylphosphinoxid, Tricyclohexlyphosphinoxid, Tris-(n-octyl)-phosphinoxid und Tris-(cyanoethyl)-phosphinoxid, insbesondere Triphenylphosphinoxid. Ebenso geeignet ist Triphenylphosphinsulfid und dessen wie oben beschriebene Derivate der Phosphinoxide.

Phosphor der Wertigkeitsstufe ±0 ist der elementare Phosphor. In Frage kommen roter und schwarzer Phosphor. Bevorzugt ist roter Phosphor.

Phosphorverbindungen der "Oxidationsstufe" +1 sind z.B. Hypophosphite rein organischer Natur, z.B. organische Hypophosphite, wie Cellulosehypophosphitester, Ester der hypophosphorigen Säuren mit Diolen, wie z.B. von 1,10-Dodecyldiol. Auch substituierte Phosphinsäuren und deren Anhydride, wie z.B. Diphenylphosphinsäure, können eingesetzt werden. Des weiteren kommen in Frage Diphenylphosphinsäure, Di-p-Tolylphosphinsäure, Di-Kresylphosphinsäureanhydrid, Es kommen aber auch Verbindungen wie Hydrochinon-, Ethylenglykol-, Propylenglykol-bis(diphenylphosphinsäure)-ester u.a. in Frage. Ferner sind geeignet Aryl(Alkyl)phosphinsäureamide, wie z.B. Diphenylphosphinsäure-dimethylamid und Sulfonamidoaryl(alkyl)phosphinsäure-derivate, wie z.B. p-Tolylsulfonamido-diphenylphosphinsäure. Bevorzugt eingesetzt werden Hydrochinon- und Ethylenglykol-bis-(diphenylphosphinsäure)ester und das Bisdiphenylphosphinat des Hydrochinons.

Phosphorverbindungen der Oxidationsstufe +3 leiten sich von der phosphorigen Säure ab. Geeignet sind cyclische Phosphonate, die sich vom Pentaerythrit, Neopentylglykol oder Brenzkatechin ableiten wie z.B. Verbindungen gemäß Formel (II) 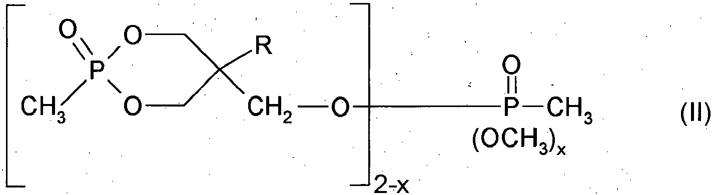 wobei R einen C₁ bis C₄-Alkylrest, bevorzugt Methylrest, x=0 oder 1 bedeutet (z.B. Amgard^{®} P 45 der Firma Albright & Wilson).

Ferner ist Phosphor der Wertigkeitsstufe +3 in Triaryl(alkyl)phosphiten, wie z.B. Triphenylphosphit, Tris(4-decylphenyl)phosphit, Tris(2,4-di-tert.-butylphenyl)phosphit oder Phenyldidecylphosphit u.a. enthalten. Es kommen aber auch Diphosphite, wie z.B. Propylenglykol-1,2-bis(diphosphit) oder cyclische Phosphite, die sich vom Pentaerythrit, Neopentylglykol oder Brenzkatechin ableiten, in Frage. Besonders bevorzugt werden Methylneopentylglycolphosphonat und -phosphit sowie Dimethylpentaerythritdiphosphonat und -phosphit.

Als Phosphorverbindungen der Oxidationsstufe +4 kommen vor allem Hypodiphosphate, wie z.B. Tetraphenylhypodiphosphat oder Bisneopentylhypodiphosphat in Betracht.

Als Phosphorverbindungen der Oxidationsstufe +5 kommen vor allem alkyl- und arylsubstituierte Phosphate in Betracht. Beispiele sind Phenylbisdodecylphosphat, Phenylethylhydrogenphosphat, Phenyl-bis(3,5,5-trimethylhexyl)phosphat, Ethyldiphenylphosphat, 2-Ethylhexyldi(tolyl)phosphat, Diphenylhydrogenphosphat, Bis(2-ethylhexyl)-p-tolylphosphat, Tritolylphosphat, Bis(2-ethylhexyl)-phenylphosphat, Di(nonyl)phenylphosphat, Phenylmethylhydrogenphosphat, Di(dodecyl)-p-tolylphosphat, p-Tolyl-bis(2,5,5-trimethylhexyl)phosphat oder 2-Ethylhexyldiphenyl-phosphat. Besonders geeignet sind Phosphorverbindungen, bei denen jeder Rest ein Aryloxi-Rest ist. Ganz besonders geeignet ist Triphenylphosphat und Resorcinol-bis-(diphenylphosphat) und dessen kernsubstituierten Derivate der allgemeinen Formel (III) (RDP): 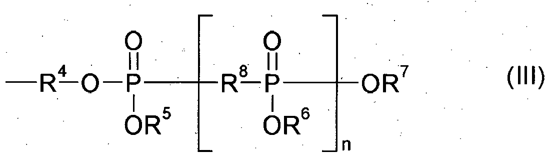 in der die Substituenten in Formel (III) folgende Bedeutung haben:
- R⁴-R⁷: ein aromatischer Rest mit 6 bis 20 C-Atomen, bevorzugt ein Phenylrest, welcher mit Alkylgruppen mit 1 bis 4 C-Atomen bevorzugt Methyl, substituiert sein kann,
- R⁸: ein zweiwertiger Phenolrest, bevorzugt 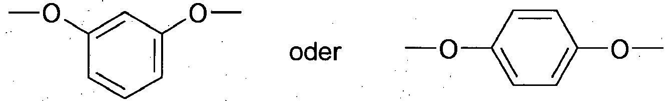
und n einen Durchschnittswert zwischen 0,1 bis 100, bevorzugt 0,5 bis 50, insbesondere 0,8 bis 10 und ganz besonders 1 bis 5.

Die im Handel erhältlichen RPD-Produkte unter dem Warenzeichen Fyroflex^{®} oder Fyrol®-RDP (Akzo) sowie CR 733-S (Daihachi) sind bedingt durch das Herstellungsverfahren Gemische aus ca. 85 % RDP (n=1) mit ca. 2,5 % Triphenylphosphat sowie ca. 12,5 % oligomeren Anteilen, in denen der Oligomerisierungsgrad meist kleiner 10 beträgt.

Des Weiteren können auch cyclische Phosphate eingesetzt werden. Besonders geeignet ist hierbei Diphenylpentaerythritdiphosphat und Phenylneopentylphosphat.

Außer den oben angeführten niedermolekularen Phosphorverbindungen kommen noch oligomere und polymere Phosphorverbindungen in Frage.

Solche polymeren, halogenfreien organischen Phosphorverbindungen mit Phosphor in der Polymerkette entstehen beispielsweise bei der Herstellung von pentacyclischen, ungesättigten Phosphindihalogeniden, wie beispielsweise in der DE-A 20 36 173 beschrieben ist. Das Molekulargewicht gemessen durch Dampfdruckosmometrie in Dimethylformamid, der Polyphospholinoxide soll im Bereich von 500 bis 7000, vorzugsweise im Bereich von 700 bis 2000 liegen.

Das Phosphor besitzt hierbei die Oxidationsstufe -1.

Ferner können anorganische Koordinationspolymere von Aryl(alkyl)-phosphinsäuren wie z.B. Poly-β-natrium(l)-methylphenylphosphinat eingesetzt werden. Ihre Herstellung wird in DE-A 31 40 520 angegeben. Der Phosphor besitzt die Oxidationszahl +1.

Weiterhin können solche halogenfreien polymeren Phosphorverbindungen durch die Reaktion eines Phosphonsäurechlorids, wie z.B. Phenyl-, Methyl-, Propyl-, Styryl- und Vinylphosphonsäuredichlorid mit bifunktionellen Phenolen, wie z.B. Hydrochinon, Resorcin, 2,3,5-Trimethylhydrochinon, Bisphenol-A, Tetramethylbiphenol-A entstehen.

Weitere halogenfreie polymere Phosphorverbindungen, die in den erfindungsgemäßen Formmassen enthalten sein können, werden durch Reaktion von Phosphoroxidtrichlorid oder Phosphorsäureesterdichloriden mit einem Gemisch aus mono-, bi- und trifunktionellen Phenolen und anderen Hydroxylgruppen tragenden Verbindungen hergestellt (vgl. Houben-Weyl-Müller, Thieme-Verlag Stuttgart, Organische Phosphorverbindungen Teil II (1963)). Ferner können polymere Phosphonate durch Umesterungsreaktionen von Phosphonsäureestern mit bifunktionellen Phenolen (vgl. DE-A 29 25 208) oder durch Reaktionen von Phosphonsäureestern mit Diaminen oder Diamiden oder Hydraziden (vgl. US 4,403,075) hergestellt werden. In Frage kommt aber auch das anorganische Poly(ammoniumphosphat).

Es können auch oligomere Pentaerythritphosphite, -phosphate und -phosphonate gemäß EP-B 008 486, z.B. Mobil Antiblaze^{®} 19 (eingetragene Marke der Firma Mobil Oil), verwendet werden (s. Formeln (IV) und (V)): 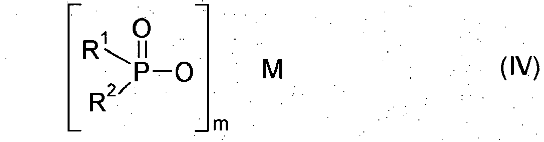 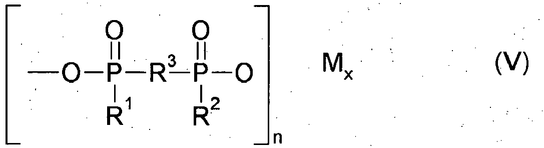 wobei die Substituenten in den Formeln (IV) und (V) folgende Bedeutung haben:
- R¹, R²: Wasserstoff, C₁- bis C₆-Alkyl, der gegebenenfalls eine Hydroxylgruppe enthält, vorzugsweise C₁- bis C₄-Alkyl, linear oder verzweigt, z.B. Methyl, Ethyl, n-Propyl, isoPropyl, n-Butyl, tert.-Butyl, n-Pentyl; Phenyl; wobei bevorzugt mindestens ein Rest R¹ oder R², insbesondere R¹ und R² Wasserstoff ist;
- R³: C₁- bis C₁₀-Alkylen, linear oder verzweigt, z.B. Methylen, Ethylen, n-Propylen, isoPropylen, n-Butylen, tert.-Butylen, n-Pentylen, n-Octylen, n-Dodecylen; Arylen, z.B. Phenylen, Naphthylen; Alkylarylen, z.B. Methyl-phenylen, Ethyl-phenylen, tert.-Butyl-phenylen, Methylnaphthylen, Ethyl-naphthylen, tert.-Butyl-naphthylen; Arylalkylen, z.B. Phenyl-methylen, Phenyl-ethylen, Phenyl-propylen, Phenyl-butylen;
- M: ein Erdalkali-, Alkalimetall, Al, Zn, Fe, Bor;
- m: eine ganze Zahl von 1 bis 3;
- n: eine ganze Zahl von 1 und 3 und
- x: 1 oder 2.

Besonders bevorzugt sind Verbindungen der Formel IV, in denen R¹ und R² Wasserstoff ist, wobei M vorzugsweise Ca, Zn oder Al ist und Calciumphosphinat als Verbindung ganz besonders bevorzugt ist. Derartige Produkte sind im Handel z.B. als Calciumphosphinat erhältlich.

Geeignete Salze der Formel IV oder V, in denen nur ein Rest R¹ oder R² Wasserstoff bedeutet, sind z.B. Salze der Phenylphosphinsäure, wobei deren Na- und/oder Ca-Salze bevorzugt sind.

Weiterhin bevorzugte Salze weisen einen hydroxylgruppenhaltigen Alkylrest R¹ und/oder R² auf. Diese sind beispielsweise durch Hydroxymethylierung erhältlich. Bevorzugte Verbindungen sind Ca, Zn und Al-Salze.

Die mittlere Teilchengröße D₅₀ der Komponente B2) (bestimmt wie bei der mittleren Teilchengröße D₅₀ des expandierbaren Graphits B1) beschrieben) ist vorzugsweise kleiner 10 µm, vorzugsweise kleiner 7 µm und insbesondere kleiner 5 µm.

Der D₁₀-Wert ist vorzugsweise kleiner 4 µm, insbesondere 3 µm und ganz besonders bevorzugt kleiner 2 µm. Bevorzugte d₉₀-Werte sind kleiner 40 µm und insbesondere kleiner 30 µm und ganz besonders bevorzugt kleiner 20 µm.

Weiterhin bevorzugt sind Phosphorverbindungen der allgemeinen Formel (VI): 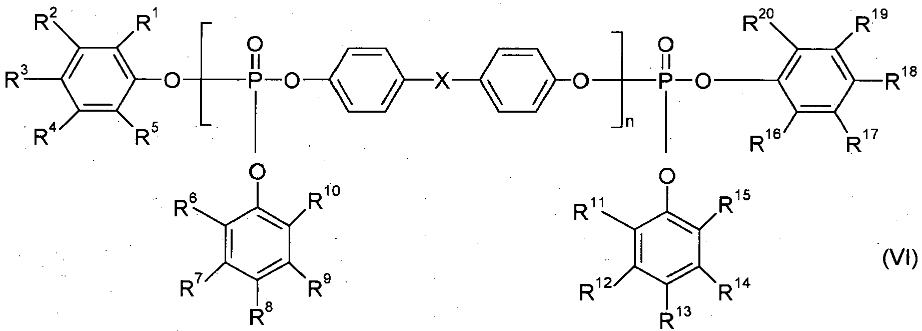 wobei die Substituenten in Formel VI folgende Bedeutung haben:
- R¹ bis R²⁰: unabhängig voneinander Wasserstoff, eine lineare oder verzweigte Alkylgruppe bis zu 6 C-Atomen
- n: einen Durchschnittswert von 0,5 bis 50 und
- X: eine Einfachbindung, C=O, S, SO₂, C(CH₃)₂.

Bevorzugte Verbindungen B2) sind solche der Formel VI, in denen R¹ bis R²⁰ unabhängig voneinander Wasserstoff und/oder einen Methylrest bedeuten. Für den Fall, dass R¹ bis R²⁰ unabhängig voneinander einen Methylrest bedeuten, sind solche Verbindungen bevorzugt, in welchen die Reste R¹, R⁵, R⁶, R¹⁰, R¹¹, R¹⁵, R¹⁶, R²⁰ in ortho-Stellung zum Sauerstoff der Phosphatgruppe mindestens einen Methylrest darstellen. Weiterhin bevorzugt sind Verbindungen B2) in denen pro aromatischem Ring eine Methylgruppe, vorzugsweise in ortho-Stellung vorhanden ist und die anderen Reste Wasserstoff bedeuten.

Insbesondere bevorzugt sind als Substituenten SO₂ und S, sowie ganz besonders bevorzugt C(CH₃)₂ für X in obiger Formel (VI).

n beträgt in obiger Formel (VI) vorzugsweise als Durchschnittswert 0,5 bis 5, insbesondere 0,7 bis 2 und insbesondere etwa 1.

Die Angabe von n als Durchschnittswert ergibt sich durch das Herstellverfahren der oben aufgeführten Verbindungen, so dass der Oligomerisierungsgrad meist kleiner 10 beträgt und geringe Anteile (meist < 5 Gew.-%) an Triphenylphosphat enthalten sind, wobei dies von Charge zu Charge unterschiedlich ist. Solche Verbindungen B2) sind als CR - 741 der Firma Daihachi im Handel erhältlich.

Als Komponente B3) enthalten die Formmassen ein fluorhaltiges Polymer. Bevorzugt sind fluorhaltige Ethylenpolymerisate. Hierbei handelt es sich um Polymerisate des Ethylens mit einem Fluorgehalt von 55 bis 76 Gew.-%, vorzugsweise 70 bis 76 Gew.-%.

Beispiele hierfür sind Polytetrafluorethylen (PTFE), Tetrafluorethylen-hexafluor-propylen-Copolymere oder Tetrafluorethylen-Copolymerisate mit kleineren Anteilen (in der Regel bis zu 50 Gew.-%) copolymerisierbarer ethylenisch ungesättigter Monomerer. Diese werden z.B. von Schildknecht in "Vinyl and Related Polymers", Wiley-Verlag, 1952, Seite 484 bis 494 und von Wall in "Fluorpolymers" (Willey Interscience, 1972) beschrieben.

Diese fluorhaltigen Ethylenpolymerisate liegen homogen verteilt in den Formmassen vor und weisen bevorzugt eine mittlere Teilchengröße D₅₀ im Bereich von 0,05 bis 10 µm, insbesondere von 0,1 bis 5 µm auf. Diese geringen Teilchengrößen lassen sich besonders bevorzugt durch Verwendung von wässrigen Dispersionen von fluorhaltigen Ethylenpolymerisaten und deren Einarbeitung in eine Polymerschmelze erzielen.

### Komponente C):

Die nach den erfindungsgemäßen Verfahren herstellbaren thermoplastischen Formmassen können ein oder mehrere - von den Komponenten A) und B) verschiedene - Zusatzstoffe als Komponente C) enthalten. Geeignet sind grundsätzlich alle dem Fachmann bekannten und in der Literatur beschriebenen kunststoffüblichen Zusatzstoffe. Kunststoffübliche Zusatzstoffe im Sinne der vorliegenden Erfindung sind beispielsweise Stabilisatoren und Oxidationsverzögerer, Mittel gegen Wärmezersetzung und Zersetzung durch ultraviolettes Licht, Gleit- und Entformungsmittel, Farbstoffe und Pigmente und Weichmacher sowie Fasern, beispielsweise Glasfasern oder Kohlenstofffasern.

Oxidationsverzögerer und Wärmestabilisatoren, die der thermoplastischen Formmasse gemäß der Erfindung zugesetzt werden können, sind z. B. Halogenide von Metallen der Gruppe I des Periodensystems, z. B. Natrium-, Kalium-, Lithium-Halogenide. Weiterhin können Zinkfluorid und Zinkchlorid verwendet werden. Ferner sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentrationen bis zu 1 Gew.-%, bezogen auf das Gewicht der thermoplastischen Formmassen, einsetzbar.

Zusammen mit den zuvor beispielhaft genannten Antioxidantien und Wärmestabilisatoren können sogenannte Costabilisatoren verwendet werden, insbesondere Phosphor- und Schwefelhaltige Costbilisatoren. Solche P- und S-haltigen Costabilisatoren sind dem Fachmann bekannt und handelsüblich. Beispielhaft seien hier z.B. Irganox PS 800, Irganox PS 802 und Irgaphos 168 genannt.

Beispiele für UV-Stabilisatoren sind verschiedene substituierte Resorcine, Salicylate, Benzotriazole und Benzophenone, die im Allgemeinen in Mengen bis zu 2 Gew.-%, bezogen auf das Gewicht der thermoplastischen Formmassen, eingesetzt werden.

Gleit- und Entformungsmittel, die in der Regel in Mengen bis zu 1 Gew.-%, bezogen auf das Gewicht der thermoplastischen Formmassen, zugesetzt werden können, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z. B. Distearylketon, eingesetzt werden. Erfindungsgemäß geeignet sind insbesondere Zink-, Magnesium- und Calciumstearat sowie N,N'-Ethylen-bis-stearamid.

Als Glasfasern können in den erfindungsgemäßen Formmassen alle dem Fachmann bekannten und in der Literatur beschriebenen Glasfasern eingesetzt werden (siehe beispielsweise Milewski, J.V., Katz, H.S. "Handbook of Reinforcements for Plastics", S. 233 ff., Van Nostrand Reinholt Company Inc, 1987).

### Herstellverfahren:

Die thermoplastischen Formmassen werden durch Schmelzevermischung der Komponenten A), B) und, falls vorhanden, C) in einem Schneckenextruder hergestellt, wobei der Schneckenextruder entlang der Förderrichtung in dieser Reihenfolge mindestens eine Dosierzone, eine Plastifizierzone, eine Homogenisierzone, mindestens eine weitere Dosierzone und eine Austragszone umfasst.

Geeignete Schneckenextruder sind beispielsweise in Saechtling, Kunststoff-Taschenbuch, Hanser Verlag, München, Wien, Ausgabe 26, 1995, Seiten 191 bis 246, beschrieben.

Schneckenextruder weisen üblicherweise Abschnitte unterschiedlicher Funktion, sogenannte "Zonen" auf. Die unterschiedlichen Zonen der Schneckenextruder sind nicht notwendigerweise identisch mit den einzelnen Bauteilen wie Gehäuseteilen oder Schneckensegmenten, aus denen die Schneckenextruder montiert sind. Eine Zone besteht in der Regel aus mehreren Bauteilen. Die einzelnen Zonen können je nach Funktion unterschiedliche räumliche Ausdehnungen, beispielsweise unterschiedliche Längen oder Volumina, haben. Üblicherweise weisen Schneckenextruder eine oder mehrere der im folgenden beschriebenen Zonen auf. Darüberhinaus können Schneckenextruder aber auch Zonen aufweisen, deren Funktion im folgenden nicht explizit beschrieben wird.

Unter Dosierzone ist der Abschnitt eines Schneckenextruders zu verstehen, in dem eine oder mehrere Komponenten, beispielsweise ein thermoplastisch verarbeitbares Polymer, dem Schneckenextruder zugeführt werden. Diese Zuführung kann mit einer Dosiereinrichtung erfolgen, beispielsweise eine kontinuierlich arbeitende Waage (loss-of-weight system) aus der mittels einer Förderschnecke das zu dosierende Gut in eine obenliegenden Öffnung in den Schneckenextruder, beispielsweise mit aufgesetztem Trichter gefördert wird, so dass die zu dosierende Komponente durch Schwerkraft in den Schneckenextruder gelangt. Die Dosiereinrichtung kann aber auch beispielsweise aus einer Förderschnecke oder einem Extruder bestehen, durch die die zu dosierende Komponente seitlich durch eine Dosieröffnung in den Schneckenextruders gedrückt wird. Grundsätzlich kann die Dosierzone aus einer oder mehreren obenliegenden oder seitlichen Öffnungen mit der zugehörenden Peripherie bestehen, wie Waagen, Dosierschnecken Seitenbeschickungsextruder, oder auch eine Schmelzeleitung. Neben der gravimetrischen Dosierung ist auch bei bekannter Schüttdichte die Volumetrische Dosierung gängig. Auch ist die Dosierung flüssiger Komponenten über Pumpen, beispielsweise Mohnopumpen, Zahnradpumpen oder Kolbenpumpen (je nach Konsistenz und Viskosität der Flüssigkeit) möglich und üblich.

Unter Plastifizierzone (oftmals auch als Aufschmelzzone bezeichnet) ist der Abschnitt eines Schneckenextruders zu verstehen, in dem eine Komponente, insbesondere Komponente A), in einen warmformbaren, meist schmelzflüssigen oder plastisch verformbaren, Zustand gebracht wird. In der Regel wird dies durch Beheizen und/oder mechanisch eingebrachte Energie erreicht. Zum Einbringen mechanischer Energie kommen als Plastifizierungselemente die dem Fachmann geläufigen Bauteile in Betracht, beispielsweise Schneckenelemente mit geringer Steigung in Förderrichtung, Knetblöcke mit schmalen oder breiten, fördernden oder nichtfördernden Knetscheiben, Schneckenelemente mit einer Steigung entgegen der Förderrichtung, oder eine Kombination solcher Elemente. Die Auswahl der Plastifizierungselemente in der Plastifizierzone richtet sich hinsichtlich ihrer Art, Anzahl und Dimensionierung nach den Komponenten der thermoplastischen Formmassen, insbesondere nach der Viskosität und Erweichungstemperatur sowie der Mischbarkeit der Komponenten.

Unter Homogenisierzone ist der Abschnitt eines Schneckenextruders zu verstehen, in dem eine oder mehrere Komponenten, von denen mindestens eine im warmformbaren Zustand ist, homogenisiert werden. Diese Homogenisierung erfolgt meist durch Mischen, Kneten oder Scheren. Geeignete Misch-, Knet- und Scherelemente sind beispielsweise die bereits als Plastifizierungselemente beschriebenen Mittel.

Darüber hinaus sind geeignete Homogenisierelemente Kombinationen von fördernden, nichtfördenden und rückfördernden Knetblöcken, die aus schmalen oder breiten Knetscheiben oder deren Kombinationen bestehen können. Ebenso geeignete Homogenisierelemente sind sogenannte Zahnscheiben, die auch mit fördernden oder nicht fördernd angestellten Zähnen ausgerüstet sein können, oder sogenannte Zahnmischelemente, bei denen beispielsweise der Gewindegang nicht durchgehend ist, sondern aus einer Reihe von Zähnen besteht; auch diese Zahnmischelemente können fördernd oder nichtfördernd ausgerüstet sein. Weitere, dem Fachmann bekannte Homogenisierelemente sind sogenannte SMEs, Schnecken mit durchbrochenen Gängen, Blisterscheiben, und diverse Arten von Sonderelementen, die von unterschiedlichen Extruderherstellern kommerziell angeboten werden. Plastifizierzone und Homogenisierzone können voneinander räumlich getrennt sein, aber auch kontinuierlich ineinander übergehen,

Unter Austragszone ist der Abschnitt eines Schneckenextruders zu verstehen, in dem der Austrag der thermoplastisch verarbeitbaren Formmasse aus dem Schneckenextruder vorbereitet und durch die Austrittsöffnung durchgeführt wird. Die Austragszone besteht meist aus einer Förderschnecke und einem geschlossenen Gehäuseteil, das mit einer definierten Austrittsöffnung abgeschlossen ist. Die Schneckensteigungen sind in diesem Bereich so eingerichtet, dass der für die Überwindung der Austrittsöffnung (Düsenplatte) notwendige Druck aufgebaut wird Bevorzugt wird als Austrittsöffnung ein Düsenkopf verwendet, der beispielsweise als Düsenplatte oder Düsenleiste ausgebildet ist, wobei die Düsen kreisförmig (Lochdüsenplatte), schlitzförmig oder in anderer Weise gestaltet sein können. Das im Falle einer Düsenplatte als Strang ausgetragene Produkt wird wie üblich, z.B. in Wasser abgekühlt und granuliert. Speziell bei Verwendung einer Schlitzdüse ist Würfelgranulierung möglich. Sofern die thermoplastisch verarbeitbare Formmasse nicht erst als Granulat erhalten, sondern direkt weiterverwendet werden soll, ist auch die Weiterverarbeitung im heißen Zustand oder die Direktextrusion von Platten, Folien, Rohren und Profilen vorteilhaft.

Ein Schneckenextruder kann darüberhinaus weitere Zonen enthalten, beispielsweise Entlüftungs- oder Entgasungszonen zum Abführen gasförmiger Bestandteile oder Abquetsch- und Entwässerungszonen zum Abtrennen und Austragen flüssiger Bestandteil, bei denen es sich um Wasser, aber auch um andere Stoffe handeln kann. Entgasungs-, Abquetsch- und Entwässerungszonen sowie deren apparative Ausführung und Anordnung sind in WO 1998/13412 beschrieben, weshalb bezüglich dieser Merkmale ausdrücklich auf die genannte Schrift verwiesen wird.

Ein Abschnitt eines Schneckenextruders kann auch zwei oder mehr der genannten Zonen vereinigen. Wird beispielsweise in die Homogenisierzone eines Extruders ein weiterer Stoff zudosiert, so fungiert die Homogenisierzone gleichzeitig als Dosierzone. In analoger Weise können die anderen der genannten Zonen in einem Abschnitt der Schneckenextruder gleichzeitig realisiert sein.

Die einzelnen Zonen können räumlich voneinander klar abgrenzbar sein oder kontinuierlich ineinander übergehen. So ist beispielsweise bei einem Extruder der Übergang von der Plastifizierzone in die Homogenisierzone räumlich nicht immer klar abgrenzbar. Es findet oftmals ein kontinuierlicher Übergang zwischen den beiden Zonen statt.

Wie allgemein bekannt ist, können die verschiedenen Zonen eines Schneckenextruders individuell geheizt oder gekühlt werden, um entlang der Förderrichtung ein optimales Temperaturprofil einzustellen. Geeignete Heiz- und Kühleinrichtungen sind dem Fachmann bekannt.

Die im Einzelfall zu wählenden Temperaturen und räumlichen Abmessungen der einzelnen Zonen unterscheiden sich in Abhängigkeit der chemischen und physikalischen Eigenschaften der Komponenten und deren Mengenverhältnissen. So liegen z.B. die Mischtemperaturen in der Homogenisierzone in der Regel zwischen 100°C und 400°C, bei Einsatz von ABS oder ASA als Komponente A) in der Regel bei 200 bis 280°C. Dabei ist zu beachten, dass die von außen eingestellten Temperaturen nur unterstützende Funktion haben. Die Gleichgewichtstemperaturen ergeben sich aus dem Energieeintrag der Schneckenwellen und den physikalischen Eigenschaften der verarbeiteten Schmelze

Wie bereits vorstehend beschrieben wird in den erfindungsgemäßen Verfahren der Schmelzevermischung ein Schneckenextruder eingesetzt, der entlang der Förderrichtung in dieser Reihenfolge mindestens eine Dosierzone, eine Plastifizierzone, eine Homogenisierzone, eine weitere Dosierzone und eine Austragszone umfasst.

In einer Ausführungsform der Erfindung können sämtliche Komponenten der thermoplastischen Formmassen -ausgenommen der wesentlichen Menge der Komponente B1)- zeitgleich, entweder räumlich getrennt voneinander oder gemeinsam, der Dosierzone des Schneckenextruders zugeführt werden. Es ist auch möglich, dass einzelne Komponenten der thermoplastischen Formmassen -ausgenommen der wesentlichen Menge der Komponente B1)- vorgemischt und der Dosierzone zugeführt werden, und dann die restlichen Komponenten einzeln und/oder ebenfalls gemischt in Förderrichtung gesehen hinter dieser Dosierzone hinzugegeben werden.

Erfindungswesentlich ist, dass die Dosierung das expandierbare Graphit B1) in den Schneckenextruder, der eine Baulänge L aufweist, wobei die Baulänge L definiert ist als die Strecke beginnend bei der ersten Dosiereinrichtung für die Zugabe der Komponenten A, B und/oder C und in Förderrichtung endend bei der Austrittsöffnung des Extruders. Die Zugabe der Komponenten A, B und C erfolgt bevorzugt im Bereich von 0 L bis 0,15 L, wobei in einem ersten Verfahrensschritt in Abwesenheit von Komponente B1) eine Schmelze erzeugt wird. Die im zweiten Verfahrensschritt nachfolgende Zugabe der Komponente B1) und das Einmischen in die Schmelze enthaltend die Komponenten A, B und C erfolgt in der Regel im Bereich von 0,5 L bis 0,99 L, bevorzugt im Bereich von 0,5 L bis 0,95 L, besonders bevorzugt im Bereich von 0,6 L bis 0,9 L, insbesondere im Bereich von 0,7 L bis 0,85L.

Ungeachtet der Bezeichnungen "erster Verfahrensschritt" und "zweiter Verfahrensschritt", die der Klarstellung dienen, dass das Erzeugen der Schmelze enthaltend die Komponenten A, B und C einerseits und das Einmischen der Komponente B1) andererseits zwei zeitlich und/oder räumlich separierte Vorgänge sind, wird der Extruder selbstverständlich kontinuierlich und bevorzugt in einem stationären Zustand betrieben.

Grundsätzlich kann die Dosierung des expandierbaren Graphits B1) in den Schneckenextruder somit auch schon in der Dosierzone oder der Plastifizierzone erfolgen, was aber nicht zu der gewünschten Produktqualität führt und somit nicht erfindungsgemäß ist. Erfindungsgemäß erfolgt Plastifizierung und Homogenisierung der Formmassen, im wesentlichen bestehend aus allen Komponenten außer B1 vor der Zugabe der Komponente B1. Die Einmischung der Komponente B1 in die restliche Thermoplastschmelze erfolgt bevorzugt durch reine Förderelemente gleicher oder unterschiedlicher Steigung.

Vorteilhafterweise erfolgt die Dosierung des expandierbaren Graphits B1) in den Schneckenextruder daher nach der Homogenisierzone (d.h., die Extruderschnecke kann in der Plastifizierzone mit Scherelementen ausgerüstet werden), besonders bevorzugt zwischen Homogenisierzone und Austragszone (d.h., die Extruderschnecke kann in der Plastifizierzone und/oder der Homogenisierzone mit Scherelementen ausgerüstet werden. Scherelemente im Sinne dieser Anmeldung sind solche, die mehr Scherenergie in die Thermoplastschmelze einbringen, als reine positiv fördernde Elemente. Beispielsweise seien benannt rückwärts fördernde Schneckenelemente, vorwärts - 'rückwärts-, oder neutral fördernde Knetblöcke unterschiedlicher Steigungen, entsprechende Zahnmischelemente und Zahnscheiben, um hier einige Beispiele zu benennen.

In einer besonders bevorzugten Ausführungsform werden Förderelemente unterschiedlicher Steigung eingesetzt, wobei die Steigungen abwechseln können zwischen steil und flach und wieder steil oder aber auch kontinuierlich flach bis steil ansteigend.

Der expandierbare Graphit B1) kann in reiner Form, aber auch in Mischung mit anderen Komponenten, beispielsweise mit einem Teil der Komponenten B2 und/oder B3 oder auch Additiven wie Schmiermitteln, Stabilisatoren oder einem Teil der als Komponente C aufgeführten Mitteln zugeführt werden, bevorzugt ist die Mischung aus B1 und C besonders bevorzugt B1 in reiner Form.

Das Merkmal, dass "die Extruderschnecke keine Scherelemente umfasst" bedeutet, dass die Extruderschnecke nur noch Elemente, beispielsweise Förderelemente, aufweist, die eine möglichst kleine Scherwirkung entfalten; Scherelemente, deren wesentliche Funktion dem Eintrag von Scherkräften in das Fördergut dient, sind in der Regel nicht vorhanden. Scherelemente im Sinne dieser Erfindung sind solche, die mehr Scherenergie in die Thermoplastschmelze einbringen, als reine positiv fördernde Elemente. Beispielsweise seien benannt rückwärts fördernde Schneckenelemente, vorwärts - , rückwärts- , oder neutral fördernde Knetblöcke unterschiedlicher Steigungen, entsprechende Zahnmischelemente und Zahnscheiben, Blisterscheiben, u.a..

Als Schneckenextruder können Einschnecken-Extruder sofern die Komponente B1 erfindungsgemäß dosiert werden kann oder Doppelschneckenextruder, die gleichsinnig drehend und ineinandergreifend, als auch gegenläufig kämmend sowie nicht kämmend sein können, verwendet werden. Bevorzugt werden Doppelschneckenextruder eingesetzt. Besonders bevorzugt sind gleichsinnig drehende, kämmende Doppelschneckenextruder. Es können auch gleichsinnig drehende Extruder mit mehr als 2 Schnecken eingesetzt werden, beispielsweise mit 3, 4, 6 oder 12 Schnecken (Vielwellenextruder).

Es können Extruder mit Schnecken mit kleiner, mittlerer oder großer Gangtiefe (sog. "tiefgeschnittene Schnecken") verwendet werden. Die Gangtiefe der einzusetzenden Schnecken ist maschinentypabhängig. Der jeweils einzusetzende Maschinentyp richtet sich nach der jeweiligen Aufgabe. Übliche Gangtiefenverhältnisse (Di/Da) liegen im Bereich von 0,5 bis 5, bevorzugt 0,8 bis 3, besonders bevorzugt 1 bis 2,2, insbesondere 1,2 bis 1,8 = tiefgeschnitten.

Die Gangzahl der Schnecken des Extruders kann variieren. Bevorzugt werden zweigängige Schnecken verwendet. Jedoch können auch Schnecken mit anderen Gangzahlen, beispielsweise eingängige oder dreigängige, eingesetzt werden, oder solche Schnecken, die Abschnitte mit unterschiedlichen Gangzahlen aufweisen.

Die Schneckendrehzahlen des Extruders können innerhalb eines weiten Bereiches variieren. Geeignete Drehzahlen liegen im Bereich von 50 bis 1200 U/min⁻¹, bevorzugt von 80 bis 1000 U/min⁻¹, besonders bevorzugt 100 bis 900 U/min⁻¹.

Die gemäß den erfindungsgemäßen Verfahren hergestellten thermoplastischen Formmassen enthaltend expandierbaren Graphit weisen gegenüber bekannten Formmassen eine verbesserte Kombination aus flammhemmenden und mechanischen Eigenschaften auf und ein deutlich geringerer Eigengeruch.

Die erfindungsgemäß hergestellten Formmassen eignen sich zur Herstellung von (Fasern, Folien) Formkörpern und Schäumen jeglicher Art, bevorzugt für Formkörper und Schäume, besonders bevorzugt für Formkörper, Fasern, Folien, Formkörper und Schäume enthaltend die erfindungsgemäß hergestellten Formmassen sind beispielsweise einsetzbar als Haushaltsgeräte , Gehäuse für Elektrogeräte, Unterhaltungselektronik und Computer, elektronische Bauteile, medizinische Geräte, Kfz-Bauteile und Baumaterialien.

Die Erfindung wird nachstehend anhand von Beispielen näher erläutert.

### Beispiele

### Meßmethoden

Die Viskositätszahlen VZ der Styrol-Acrylnitril-Copolymere wurden nach der Norm DIN 53727 an 0,5 gew.-%iger Dimethylformamid-Lösung bei 25 °C bestimmt.

Die mittleren Teilchengrößen der als Kautschuke eingesetzten Pfropfcopolymere wurden als Gewichtsmittel der Teilchengrößen mittels einer analytischen Ultrazentrifuge entsprechend der Methode von W. Scholtan und H. Lange, Kolloid-Z, und Z.-Polymere 250 (1972), Seiten 782 bis 796, bestimmt.

### Brandtest:

Im Brandtest in Anlehnung an UL 94, vertical burning standard, wurde an Stäben mit einer Dicke von 1,6 mm nach einer ersten Beflammungsdauer von 10 Sekunden die erste Nachbrennzeit t1 gemessen. Nach einer sich an das Verlöschen der Flammen nach 2 Sekunden anschließenden zweiten Beflammungsdauer von 10 Sekunden wurde die zweite Nachbrennzeit t2 gemessen. Die Summe der Nachbrennzeiten t1 und t2 ergibt die Nachbrennzeit t_{N}.

### Geruchstest:

Für den Geruchstest wurden Stäbe mit einer Dicke von 1,6 mm verwendet, wie sie auch für den Brandtest verwendet werden. Die Stäbe wurden in ein 500 ml Schraubglas gegeben und im geschlossenen Zustand 24h bei 60°C gelagert. Nach Abkühlung auf Zimmertemperatur wurde der Geruch auf einer Skala von sehr schlecht (- -), schlecht (-), zufriedenstellend (o), gut (+) bis sehr gut (++) bewertet.

### Einsatzstoffe:

Komponenten oder Versuche mit vorangestelltem "V-" sind nicht erfindungsgemäß und dienen zum Vergleich.

### Polymer-Komponente A):

Als Komponenten A wurden eingesetzt:
- A-1-I:: ein handelsübliches Acrylnitril-Butadien-Styrol-Copolymer (ABS), Terluran^{®} HI10, der BASF SE, enthaltend eine Styrol-Acrylnitril-Copolymer-Hartphase und einen partikel förmigen Butadien-Pfropfkautschuk.
- A-1-II:: ein Styrol-Acrylnitril-Copolymer (SAN) enthaltend 24 Gew.-% Acrylnitril und 76 Gew.-% Styrol mit einer Viskositätszahl von 64 ml/g.
- A-2:: Ein handelsübliches lineares Ethylen-Methacrylat-Copolymer, Elvaloy^{®} 1330 EAC, der Fa. DuPont de Nemours.

### Flammschutzmittelkomponente B):

Als Komponente B1) wurde eingesetzt:
- B-1:: Blähgraphit Nord-Min^{®} 503 der Firma Nordmann, Rassmann, GmbH, mit einer mittleren Teilchengröße D₅₀ von 465 µm, einer freien Expansion (beginnend bei ca. 300°C) von mindestens 150 ml/g und einer Schüttdichte von 0,5 g/ml bei 20°C.

Als Komponente B2) wurden eingesetzt:
- B-2-I:: Disflamoll^{®} TP, ein Triphenylphosphat der Lanxess Aktiengesellschaft.
- B-2-II:: Nord-Min^{®} JLS, ein Ammoniumpolyphosphat der Firma Nordmann, Rassmann, GmbH.
- B-2-III:: Masteret 38450, ein roter Phosphor-Masterbatch der Firma Italmatch Chemicals Spa

Als Komponente B3) wurde eingesetzt:
B-3: Polytetrafluorethylen PTFE TE-3893 N, Teflon^{®} Dispersion der Fa. DuPont de Nemours mit einem PTFE-Gehalt von 60 Gew.-% (bezogen auf das Gesamtgewicht der Dispersion).

Herstellung der thermoplastischen Formmassen und Bestimmung ihrer Eigenschaften:
Als Schneckenextruder (SE) wurden eingesetzt:

### SE-1:

Es wurde ein 2-Wellen-Labor-Kneter (Schneckenextruder, SE) mit einem gleichlaufenden Schneckenpaar und einem Schneckendurchmesser von 39 mm (Fa. Berstorff, Hannover) mit folgendem Gehäuseaufbau eingesetzt:

Die Gehäuselänge betrug insgesamt 32 D, verteilt auf 7 Gehäuseschüsse und 4 1-D-Zwischenplatten; Der erste Schuss wies eine nach oben offene Öffnung zur Dosierung der zu kompoundierenden Mischung auf, versehen mit einer Schnecke mit rein fördernden Elementen (Dosierzone 1) gefolgt von 2 geschlossenen Gehäusen, die überwiegend fördernde Elemente und in Schuss 3 die Aufschmelz- und Mischzone mit fördernden Elementen und rückfördernden Knetblöcken, gefolgt von einem Kombigehäuse mit seitlich angebrachter Dosierschnecke, einem weiteren geschlossenen Gehäuse und einem weiteren Kombigehäuse mit seitlich angebrachter Dosierschnecke. Anschließend folgte ein geschlossenes Gehäuse mit normal fördernden Schneckengewinden unterschiedlicher Steigung. Anschließend folgte der Extruderkopf mit einer Düsenleiste zum Austrag. Die Gehäuse 4 bis 7 waren über eine 1D-Zwischenplatte miteinander verbunden. (Die Baulänge L des Extruders betrug das zweiunddreißigfache des Schneckendurchmessers (32 D).

Die Dosierung der Komponente B1) erfolgte über eine seitlich angebrachte Dosierschnecke (ZSB), die von einer kontinuierlich arbeitenden Waage beschickt wurde. Einmal in die Dosierzone bei 45%der Extruderlänge (V1) und einmal auf ca. 75% der Extruderlänge (Bsp 1)

### SE-2:

Der Extruder hat den gleichen Aufbau wie SE-1. Im Gegensatz zu diesem erfolgte die Dosierung der Komponente B1 mittels einer kontinuierlich arbeitenden Waage und eines Trichters, jeweils auf ca. 45% (V2) und 75% (Bsp. 2) der Extruderlänge.

### SE-3:

Die Dosierung erfolgte über eine seitlich angebrachte Dosierschnecke ZSB, die durch eine kontinuierlich arbeitende Dosierwaage beschickt wurde, in die Dosierzone bei ca. 45% der Extruderlänge. Die Extruderschnecke wies ab der Dosierstelle fördernde Elemente sowie einen Knetblock und ein Zahnmischelement auf.(V3)

Für das erfindungsgemäße Beispiel 3 wurde über eine seitlich angebrachte Dosierschnecke ZSB, die durch eine kontinuierlich arbeitende Dosierwaage beschickt wurde, die Komponente B1 bei 75% der Extruderlänge dosiert.

Die in Tabelle 1 genannten Mengen der Komponenten A-C wurden in die jeweils in Tabellen 1 genannten Bereiche eines kontinuierlich betriebenen und im stationären Zustand befindlichen Zweiwellenextruders dosiert.

Die Gehäuse-Solltemperatur des Extruders betrug im Einzugsbereich Raumtemperatur, ansonsten 210 bis 230°C. Die Fördermenge betrug 75 kg/h bei 300 U/min. Die aus dem Extruder ausgetragene Schmelze wurde durch ein Wasserbad geleitet und granuliert. An diesem Granulat bzw. daraus spritzgegossenen Probekörpern wurden die in Tabelle 1 genannten Eigenschaften bestimmt.

Die Komponente B1 wurde einmal in die Seitendosierung (V-1, V-3) und einmal durch einen aufgesetzten Trichter (V-2) auf ca. 45% der Länge des Extruders dosiert. Im erfindungsgemäßen Versuch wurde bei sonst gleichen Bedingungen die Komponente B1 in die Dosierzone auf ca. 75% der Länge des Extruders dosiert. Die Eigenschaften wurden gemäß der eingereichten Tabelle bestimmt. Sowohl die Brandeigenschaften als auch der Geruch der erhaltenen Produkte war besser.

**Tabelle 1: Gewichtsteile der Komponenten, Bereich der jeweiligen Dosierung und Eigenschaften der hergestellten Formmassen**

| Beispiel* | V-1 | 1 | V-2 | 2 | V-3 | 3 |
|---|---|---|---|---|---|---|
| Extruder | SE-1 | SE-1 | SE-2 | SE-2 | SE-3 | SE-3 |
| Gewichtsteile | | | | | | |
| A-1-I | 54.6 | 54.6 | 54.6 | 54.6 | 54.6 | 54.6 |
| A-1-II | 17 | 17 | 17 | 17 | 17 | 17 |
| A-2 | 10 | 10 | 10 | 10 | 10 | 10 |
| B-1 | 8 | 8 | 8 | 8 | 8 | 8 |
| B-2-I | 4 | 4 | 4 | 4 | 4 | 4 |
| B-2-II | 1 | 1 | 1 | 1 | 1 | 1 |
| B-2-III | 5 | 5 | 5 | 5 | 5 | 5 |
| B-3 | 0.4 | 0.4 | 0.4 | 0.4 | 0.4 | 0.4 |
| | | | | | | |

| Bereich der Dosierung | | | | | | |
|---|---|---|---|---|---|---|
| A-1 | 1 | 1 | 1 | 1 | 1 | 1 |
| A-2 | 1 | 1 | 1 | 1 | 1 | 1 |
| B-1 | 4 | 6 | 4 | 6 | 4 | 6 |
| B-2 | 1 | 1 | 1 | 1 | 1 | 1 |
| B-3 | 1 | 1 | 1 | 1 | 1 | 1 |
| | | | | | | |

| Eigenschaften Brandtest (Nachbrennzeit t_{N})** | | | | | | |
|---|---|---|---|---|---|---|
| 1,6 mm Brandstäbe | | | | | | |
| Stab 1 | - | 3.1 | - | 2.0 | 30.4 | 2.5 |
| Stab 2 | 4.3 | 2.2 | | 2.5 | | 3.0 |
| Stab 3 | 22.7 | 3.6 | | 2.3 | | 2.5 |
| Stab 4 | 6.8 | 3.9 | | 2.2 | 2.9 | 2.1 |
| Stab 5 | 13.2 | 2.5 | | 2.5 | 29.1 | 2.1 |
| | | | | | | |

| Geruchstest | | | | | | |
|---|---|---|---|---|---|---|
| Note | - | + | O | ++ | ++ | + |

| | | | | | | |
|---|---|---|---|---|---|---|
| * mit "V" gekennzeichnete Beispiele sind Vergleichsbeispiele ** eine Strich ("-") bedeutet das die Probe komplett abgebrannt ist | | | | | | |

## Patentansprüche

1. Verfahren zur Herstellung thermoplastischer Formmassen enthaltend:
A) 40 bis 99 Gew.-% mindestens eines thermoplastischen Polymers,
B) 1 bis 60 Gew.-% einer Flammschutzmittelkomponente enthaltend
B1) einen expandierbaren Graphit, und
C) 0 bis 60 Gew.-% weiterer Zusatzstoffe,
wobei die Gewichtsprozente jeweils auf das Gesamtgewicht der Komponenten A) bis C) bezogen sind und zusammen 100 Gew.-% ergeben,
durch Schmelzevermischung der Komponenten A), B) und, falls vorhanden, C) in einem Schneckenextruder, wobei der Schneckenextruder entlang der Förderrichtung in dieser Reihenfolge mindestens eine Dosierzone, eine Plastifizierzone, eine Homogenisierzone, eine zweite Dosierzone und eine Austragszone umfasst,
**dadurch gekennzeichnet, dass** die Dosierung in den Schneckenextruder mit der Baulänge L, wobei die Baulänge L definiert ist als die Strecke beginnend bei der ersten Dosiereinrichtung für die Zugabe der Komponenten A, B und/oder C und in Förderrichtung endend bei der Austrittsöffnung, nach Zugabe der Komponenten A, B und C im Bereich von 0 L bis 0,15 L in einem ersten Verfahrensschritt in Abwesenheit von Komponente B1) eine Schmelze erzeugt wird, und in einem zweiten Verfahrensschritt nach Zugabe der Komponente B1) im Bereich von 0,7 L bis 0,85 L das Einmischen der Komponente B1) in diese Schmelze durchgeführt wird.

2. Verfahren zur Herstellung thermoplastischer Formmassen nach Anspruch 1, **dadurch gekennzeichnet, dass** die Einmischung der Komponente B1) in die restliche Thermoplastschmelze durch reine Förderelemente unterschiedlicher Steigung erfolgt.

3. Verfahren zur Herstellung thermoplastischer Formmassen nach Anspruch 1 oder 2, **dadurch gekennzeichnet, dass** die Formmasse enthält:
A) 50 bis 95 Gew.-% Komponente A,
B) 5 bis 50 Gew.-% Komponente B, und
C) 0 bis 45 Gew.-% Komponente C,
wobei die Gewichtsprozente jeweils auf das Gesamtgewicht der Komponenten A) bis C) bezogen sind und zusammen 100 Gew.-% ergeben.

4. Verfahren zur Herstellung thermoplastischer Formmassen nach einem der Ansprüche 1 bis 3, **dadurch gekennzeichnet, dass** die Formmasse enthält:
A) 65 bis 90 Gew.-% Komponente A,
B) 10 bis 35 Gew.-% Komponente B, und
C) 0 bis 25 Gew.-% Komponente C,
wobei die Gewichtsprozente jeweils auf das Gesamtgewicht der Komponenten A) bis C) bezogen sind und zusammen 100 Gew.-% ergeben.

5. Verfahren zur Herstellung thermoplastischer Formmassen nach einem der Ansprüche 1 bis 4, **dadurch gekennzeichnet, dass** die Formmasse als Komponente A) ein ABS-Copolymer und/oder ein SAN-Copolymer und/oder ein Ethylen-Methacrylat-Coploymer enthält.

6. Verfahren zur Herstellung thermoplastischer Formmassen nach einem der Ansprüche 1 bis 5, **dadurch gekennzeichnet, dass** die Formmasse als Komponente B neben einem Blähgraphit mindestens eine der folgenden Komponenten B2) oder B3) enthält: Triphenylphosphat, Ammoniumpolyphosphat, roter Phosphor und PTFE.

7. Verfahren zur Herstellung thermoplastischer Formmassen nach einem der Ansprüche 1 bis 6, **dadurch gekennzeichnet, dass** die Formmasse als Komponente B neben einem Blähgraphit mindestens eine Komponente B2) ausgewählt aus Triphenylphosphat, Ammoniumpolyphosphat und roter Phosphor enthält sowie als Komponente B3) PTFE enthält.

## Claims

1. A process for the preparation of thermoplastic molding materials comprising:
A) from 40 to 99% by weight of at least one thermoplastic polymer,
B) from 1 to 60% by weight of a flameproofing component comprising
B1) an expandable graphite, and
C) from 0 to 60% by weight of further additives,
the percentages by weight being based in each case on the total weight of the components A) to C) and together giving 100% by weight,
by mixing melts of the components A), B) and, if present, C) in a screw extruder, the screw extruder comprising at least one metering zone, one plasticating zone, one homogenization zone, one second metering zone and one discharge zone in this sequence along the conveying direction,
wherein the metering into the screw extruder having the length L, the length L being defined as the section beginning at the first metering means for the addition of components A, B and/or C and ending, in the conveying direction, at the exit opening, following addition of components A, B and C in the region from 0 L to 0.15 L in a first process step in the absence of component B1) a melt is produced, and in a second process step after addition of the component B1) in the region from 0.7 L to 0.85 L the mixing of component B1) into this melt is carried out.

2. The process for the preparation of thermoplastic molding materials according to claim 1, wherein the mixing of component B1) into the remaining thermoplastic melt is achieved by elements of different pitch which have purely a conveying function.

3. The process for the preparation of thermoplastic molding materials according to claim 1 or 2, wherein the molding material comprises:
A) from 50 to 95% by weight of component A,
B) from 5 to 50% by weight of component B, and
C) from 0 to 45% by weight of component C,
the percentages by weight being based in each case on the total weight of the components A) to C) and together giving 100% by weight.

4. The process for the preparation of thermoplastic molding materials according to any of claims 1 to 3, wherein the molding material comprises:
A) from 65 to 90% by weight of component A,
B) from 10 to 35% by weight of component B, and
C) from 0 to 25% by weight of component C,
the percentages by weight being based in each case on the total weight of the components A) to C) and together giving 100% by weight.

5. The process for the preparation of thermoplastic molding materials according to any of claims 1 to 4, wherein the molding material comprises, as component A), an ABS copolymer and/or an SAN copolymer and/or an ethylene-methacrylate copolymer.

6. The process for the preparation of thermoplastic molding materials according to any of claims 1 to 5, wherein the molding material comprises, as component B, alongside an exfoliated graphite, at least one of the following components B2) or B3): triphenyl phosphate, ammonium polyphosphate, red phosphorus, and PTFE.

7. The process for the preparation of thermoplastic molding materials according to any of claims 1 to 6, wherein the molding material comprises, as component B, alongside an exfoliated graphite, at least one component B2) selected from triphenyl phosphate, ammonium polyphosphate and red phosphorus, and also, as component B3), PTFE.

## Revendications

1. Procédé pour la production de matières à mouler thermoplastiques contenant :
A) 40 à 99% en poids d'au moins un polymère thermoplastique,
B) 1 à 60% en poids d'un composant agent ignifuge contenant
B1) un graphite expansible, et
C) 0 à 60 % en poids d'autres additifs,
les pour cent en poids se rapportant chaque fois au poids total des composants A) à C) et faisant ensemble 100 % en poids,
par mélange en masse fondue des composants A), B) et, si présent, C) dans une extrudeuse à vis, l'extrudeuse à vis comprenant le long de la direction de transport, dans cet ordre, au moins une zone d'alimentation, une zone de plastification, une zone d'homogénéisation, une deuxième zone d'alimentation et une zone de décharge,
**caractérisé en ce que** l'alimentation dans l'extrudeuse à vis ayant la longueur de construction L, la longueur de construction L étant définie comme le tronçon commençant a niveau du premier dispositif d'alimentation pour l'addition des composants A, B et/ou C et se terminant, dans la direction de transport, au niveau de l'orifice de sortie, après addition des composants A, B et C dans la plage de 0 1 à 0,15 1, dans une première étape du procédé, une masse fondue est produite en absence de composant B1) et, dans une deuxième étape du procédé, après addition du composant B1) dans la plage de 0,7 1 à 0,85 1 on effectue l'incorporation du composant B1) dans cette masse fondue.

2. Procédé pour la production de matières à mouler thermoplastiques selon la revendication 1, **caractérisé en ce que** l'incorporation du composant B1) dans la masse fondue de matière thermoplastique restante s'effectue au moyen d'éléments de transport vrais à pente variée.

3. Procédé pour la production de matières à mouler thermoplastiques selon la revendication 1 ou 2, **caractérisé en ce que** la matière à mouler contient :
A) 50 à 95 % en poids de composant A,
B) 5 à 50 % en poids de composant B, et
C) 0 à 45 % en poids de composant C,
les pourcentages en poids se rapportant chaque fois au poids total des composants A) à C) et faisant ensemble 100 % en poids.

4. Procédé pour la production de matières à mouler thermoplastiques selon l'une quelconque des revendications 1 à 3, **caractérisé en ce que** la matière à mouler contient :
A) 65 à 90 % en poids de composant A,
B) 10 à 35 % en poids de composant B, et
C) 0 à 25 % en poids de composant C,
les pourcentages en poids se rapportant chaque fois au poids total des composants A) à C) et faisant ensemble 100 % en poids.

5. Procédé pour la production de matières à mouler thermoplastiques selon l'une quelconque des revendications 1 à 4, **caractérisé en ce que** la matière à mouler contient en tant que composant A) un copolymère ABS et/ou un copolymère SAN et/ou un copolymère éthylène-méthacrylate.

6. Procédé pour la production de matières à mouler thermoplastiques selon l'une quelconque des revendications 1 à 5, **caractérisé en ce que** la matière à mouler contient comme composant B, outre un graphite soufflé, au moins l'un des composants B2) ou B3) suivants : phosphate de triphényle, polyphosphate d'ammonium, phosphore rouge et PTFE.

7. Procédé pour la production de matières à mouler thermoplastiques selon l'une quelconque des revendications 1 à 6, **caractérisé en ce que** la matière à mouler contient comme composant B, outre un graphite soufflé, au moins un composant B2) choisi parmi le phosphate de triphényle, le polyphosphate d'ammonium et le phosphore rouge et contient comme composant B3) du PTFE .
